# EUROPÄISCHE PATENTANMELDUNG

(11) **EP 3 825 060 A1**
(43) Veröffentlichungstag der Anmeldung: **26.05.2021**
(21) Anmeldenummer: 20206947.2
(22) Anmeldetag: 11.11.2020
(51) Int. Cl.: B24B 31/06, B24B 31/00, B24B 31/16, B24B 57/04

(54) **GLEITSCHLEIFVORRICHTUNG**

(30) Priorität: 15.11.2019 DE 102019130933
(71) Anmelder: Rösler Holding GmbH, 96231 Bad Staffelstein (DE)
(72) Erfinder: MÜLLER, Ralf, 96269 Großheirath (DE); EICHENBERG, Dennis, 96275 Marktzeuln (DE)
(74) Vertreter: Manitz Finsterwald Patent- und Rechtsanwaltspartnerschaft mbB

(57) **Zusammenfassung**

Eine Gleitschleifvorrichtung weist einen Arbeitsbehälter und eine Schleifkörperabzugseinrichtung auf, mit der Schleifkörper aus dem Arbeitsbehälter abgeführt werden können.

## Beschreibung

Die vorliegende Erfindung betrifft eine Gleitschleifvorrichtung zum Gleitschleifen von Werkstücken mittels Bearbeitungsmedien in Form von Schleifkörpern, mit einem Arbeitsbehälter zur Aufnahme der Schleifkörper und der Werkstücke.

Derartige Gleitschleifvorrichtungen sind aus dem Stand der Technik bekannt und beispielsweise als Durchlaufanlagen, Fliehkraftanlagen, Rundvibratoren, Schleppschleifanlagen, Tauchschleifanlagen oder dergleichen zum Schleifen und Polieren von Werkstücken ausgebildet. Bei manchen dieser Anlagen bewegen sich die Werkstücke zusammen mit den Schleifkörpern in dem durch eine Vibrationseinrichtung in Schwingungen versetzten Arbeitsbehälter und werden nach der Bearbeitung zusammen mit den Schleifkörpern aus dem Arbeitsbehälter ausgetragen. Wenn die Werkstücke jedoch fest mit dem Arbeitsbehälter verbunden sind, so dass diese zusammen mit diesem vibrieren, müssen die Schleifkörper nach der Bearbeitung zunächst aus dem Arbeitsbehälter entfernt werden oder die Werkstücke müssen aus dem mit Schleifkörpern gefüllten Arbeitsbehälter "ausgegraben" werden. Letzteres ist insbesondere dann von Nachteil, wenn die Werkstücke empfindliche oder schwere Bauteile sind. In beiden Fällen verlängert sich hierdurch die Prozesszeit.

Es ist deshalb die Aufgabe der vorliegenden Erfindung, eine Gleitschleifvorrichtung zu schaffen, mit der ein insbesondere automatisierter Betrieb mit verringerten Durchlaufzeiten möglich ist.

Die Lösung dieser Aufgabe erfolgt durch die Merkmale des Anspruchs 1.

Erfindungsgemäß ist in dem Arbeitsbehälter eine mit diesem verbundene Werkstückhalterung vorgesehen, mit der zumindest ein Werkstück vibrationsfest an dem Arbeitsbehälter befestigt werden kann, so dass dieses zusammen mit dem Arbeitsbehälter vibriert. Weiterhin ist eine Schleifkörperabzugseinrichtung vorgesehen, welche die Schleifkörper aus dem Arbeitsbehälter in einen Zwischenspeicher überführt. Hierdurch ist ein wesentlich schnellerer und auch automatisiert durchführbarer Chargenwechsel möglich, da die Schleifkörper durch die Schleifkörperabzugseinrichtung automatisiert aus dem Arbeitsbehälter abgezogen werden können. Überraschenderweise hat sich nämlich herausgestellt, dass das automatisierte Abziehen von Schleifkörpern trotz deren Empfindlichkeit (zum Beispiel Keramikmaterial, Glasmaterial sowie scharfkantige oder dünne Geometrien) und Größe - im Gegensatz zu sehr kleinem und hartem Strahlmittel, das bei Strahlverfahren verwendet wird - realisiert werden kann. Da die Schleifkörper in einen Zwischenspeicher überführt werden, ist es zudem möglich, nach dem Entleeren des Arbeitsbehälters Werkstücke aus dem von Schleifkörpern befreiten Arbeitsbehälter zu entfernen und diesen ggf. zu reinigen. Anschließend können die Schleifkörper aus dem Zwischenspeicher wieder in den Arbeitsbehälter eingebracht werden, so dass ein neuer Arbeitszyklus beginnen kann. Durch das Abziehen der Schleifkörper aus dem Arbeitsbehälter kann dieser schonend entleert werden, sodass eine Entnahme des Werkstücks beschädigungsfrei möglich ist. Gleichzeitig ist hierdurch die Prozessdauer reduziert und die Effizienz erhöht, da die Schleifkörper für einen nachfolgenden Bearbeitungsvorgang wieder verwendet werden können.

Vorteilhafte Ausführungsformen der Erfindung sind in der Beschreibung, der Zeichnung sowie den Unteransprüchen beschrieben.

Nach einer ersten vorteilhaften Ausführungsform kann die Schleifkörperabzugseinrichtung eine Unterdruckquelle, insbesondere in Form eines Seitenkanalverdichters, aufweisen. Mit einer solchen Unterdruckquelle lassen sich die vergleichsweise großen und schweren, jedoch empfindlichen Schleifkörper schonend aus dem Arbeitsbehälter absaugen und in den Zwischenspeicher überführen.

Nach einer weiteren vorteilhaften Ausführungsform kann der Zwischenspeicher als Fliehkraftabscheider ausgebildet sein. Hierdurch ergibt sich der große Vorteil, dass der Zwischenspeicher nicht nur als Speicher sondern gleichzeitig als Mittel dient, um die beim Ansaugen beschleunigten Schleifkörper ausreichend und beschädigungsfrei abzubremsen. Hierdurch wird eine Beschädigung der Schleifkörper verhindert, die ansonsten Ursache dafür sein könnte, dass sich Schleifkörper ungewünscht in Aussparungen eines Werkstücks verklemmen.

Nach einer weiteren vorteilhaften Ausführungsform kann ein Auslass des Zwischenspeichers oberhalb des Arbeitsbehälters angeordnet sein. Hierdurch können die zwischengespeicherten Schleifkörper mittels Schwerkraft wieder in den Arbeitsbehälter eingefüllt werden, ohne dass hierzu gesonderte Fördermittel erforderlich sind.

Nach einer weiteren vorteilhaften Ausführungsform kann der Zwischenspeicher mit einer Vibrationseinrichtung versehen sein. Hierdurch kann der Zwischenspeicher beim Entleeren der Schleifkörper in Schwingungen versetzt werden, so dass die Reibung zwischen den Schleifkörpern eliminiert wird, um ein Ausströmen der Schleifkörper in den Arbeitsbehälter zu gewährleisten.

Nach einer weiteren vorteilhaften Ausführungsform kann der Zwischenspeicher eine von einem ferngesteuerten Verschluss verschließbare Auslassöffnung aufweisen, so dass ein erneutes Befüllen des Arbeitsbehälters ohne manuellen Eingriff ferngesteuert durchgeführt werden kann.

Nach einer weiteren vorteilhaften Ausführungsform kann der Zwischenspeicher zumindest einen Füllstandssensor und/oder einen Druckschalter aufweisen, um eine automatisierte Steuerung des Entleerens und des erneuten Befüllens des Arbeitsbehälters zu ermöglichen.

Nach einer weiteren vorteilhaften Ausführungsform kann der Arbeitsbehälter mit einem Schrägboden versehen sein, der in Richtung eines Austrittsöffnung für die Schleifkörper geneigt ist. Dies begünstigt ein Absaugen der Schleifkörper durch die Abzugseinrichtung, so dass bei einem Entleeren keine Schleifkörper innerhalb des Arbeitsbehälters verbleiben.

Nach einer weiteren vorteilhaften Ausführungsform kann der Zwischenspeicher als Flachbettspeicher ausgebildet sein, der eine Unterdruckkammer und optional eine Vibrationseinrichtung aufweist. Ein solcher Flachbettspeicher besitzt eine geringe Bauhöhe und kann beispielsweise als Vibrationsrinne ausgebildet sein, die geschlossen ist und eine Unterdruckkammer bildet. Zum Entleeren des Flachbettspeichers kann dieser vibriert werden, sodass Schleifkörper in den Arbeitsbehälter zurückgeführt werden können.

Nach einer weiteren vorteilhaften Ausführungsform kann der Zwischenspeicher eine haftungsmindernde Wandung aufweisen, die beispielsweise als Lochblech oder als ein mit Oberflächenstrukturen versehenes Wandungsteil ausgebildet ist. Auf diese Weise kann verhindert werden, dass Schleifkörper an der Wandung des Zwischenspeichers anhaften.

Nach einer weiteren vorteilhaften Ausführungsform kann eine Prozesssteuerung vorgesehen sein, die einen automatisierten Betrieb der Gleitschleifvorrichtung steuert. Eine solche Prozesssteuerung kann derart ausgebildet sein, dass ein Abziehen der Schleifkörper in den Zwischenspeicher veranlasst wird, wobei zu geeigneten Zeitpunkten, insbesondere überwacht durch eine Kamera mit einem Bilderkennungssystem, Spülflüssigkeit in den Arbeitsbehälter eingelassen und/oder Druckluft in den Arbeitsbehälter eingeblasen werden kann, um die Schleifkörper aus dem Arbeitsbehälter vollständig abzuziehen. Die Prozesssteuerung kann weiterhin dafür sorgen, dass Prozessflüssigkeit und/oder Spülflüssigkeit geeignet aus dem Arbeitsbehälter abgelassen wird und dass die Schleifkörperabzugseinrichtung bzw. deren Unterdruckquelle geeignet angesteuert wird.

Zumindest eine Kamera kann hierbei zur Überwachung des Innenraums des Arbeitsbehälters vorgesehen werden, wobei diese Kamera auf vorteilhafte Weise an der Unterseite eines Deckels des Arbeitsbehälters befestigt sein kann, so dass auch bei geschlossenem Arbeitsbehälter eine automatisierte Prozessüberwachung durchgeführt werden kann. Mit computerunterstützter Bilderkennung- und Auswertung lässt sich hierbei nicht nur eine Prozessüberwachung sondern auch eine Qualitätssicherung automatisiert durchführen.

Über einen an dem Zwischenspeicher angeordneten Füllstandssensor lässt sich mithilfe der Prozesssteuerung weiterhin überwachen, ob ein Nachfüllen von Schleifkörpern erforderlich ist, sodass diese aus einem Speicher automatisiert zugeführt werden können. Weiterhin kann die Prozesssteuerung ein Entleerungsprogramm vorsehen, mit dem die Schleifkörper auf für die Werkstücke besonders schonende Art und Weise aus dem Arbeitsbehälter abgezogen werden können. So kann beispielsweise nach Inbetriebnahme der Schleifkörperabzugseinrichtung ein Vibrieren des Arbeitsbehälters ausgelöst werden, um die Schleifkörper aus dem Arbeitsbehälter auszutragen. Die Prozesssteuerung kann dabei die Stärke der Vibration durch Regelung der Drehzahl der Unwuchtmotoren steuern und dafür sorgen, dass die Vibration beispielsweise reduziert wird, wenn sich die Schleifkörper bis in den Bereich eines am Boden des Arbeitsbehälters befindlichen Werkstücks abgesenkt haben. In diesem Fall besteht bei zu starken Vibrationen die Gefahr, dass das Werkstück beschädigt wird, sodass eine Reduzierung der Vibrationen zu diesem Zeitpunkt vorteilhaft ist. Gleichzeitig können geeignete Spül- und Einblasvorgänge ausgelöst werden, um alle Schleifkörper schonend aus dem Arbeitsbehälter zu entfernen.

Nach einem weiteren Aspekt betrifft die vorliegende Erfindung ein Verfahren zum Betreiben einer Gleitschleifvorrichtung der vorstehend genannten Art, wobei zunächst der Arbeitsbehälter vibriert wird, um die darin befindlichen Schleifkörper in Bewegung zu versetzen und die Werkstücke für eine bestimmte Zeit zu schleifen. Anschließend wird die Schleifkörperabzugseinrichtung in Betrieb gesetzt, um die Schleifkörper aus dem Arbeitsbehälter in den Zwischenspeicher zu überführen, wobei jedoch während dieses Vorgangs der Arbeitsbehälter vibriert wird. Auf diese Weise ist dafür gesorgt, dass sich die innerhalb des Arbeitsbehälters befindlichen Schleifkörper durch dessen Vibration stets in Richtung der Abzugseinrichtung bewegen. Für einen automatisierten Betrieb kann es dabei vorteilhaft sein, wenn die Vibration des Arbeitsbehälters in Abhängigkeit von dem Druck in dem Zwischenspeicher und/oder in Abhängigkeit von dem Füllstand in dem Zwischenspeicher gesteuert wird.

Nachfolgend wird die vorliegende Erfindung rein beispielhaft anhand einer vorteilhaften Ausführungsform und unter Bezugnahme auf die beigefügten Zeichnungen beschrieben. Es zeigen:
- Fig. 1: eine Draufsicht auf eine Gleitschleifvorrichtung;
- Fig. 2: eine Schnittansicht entlang der Linie II-II von Fig. 1;
- Fig. 3: eine Draufsicht auf den Arbeitsbehälter von Fig. 1 bei geöffnetem Deckel;
- Fig. 4: eine Schnittansicht entlang der Linie IV-IV von Fig. 3;
- Fig. 5 und 6: perspektivische Ansichten einer Schleifkörperabzugseinrichtung; und
- Fig. 7: eine Schnittansicht durch den Zwischenspeicher von Fig. 5 und 6.

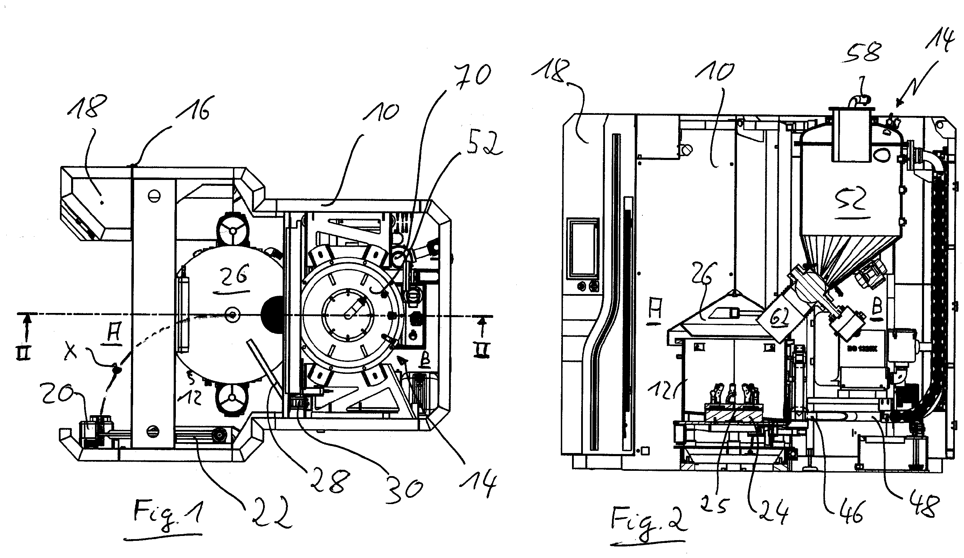

Die in Fig. 1 und 2 dargestellte Gleitschleifvorrichtung weist ein Gehäuse 10 auf, das zweigeteilt ist und in einem zur Vorderseite offenen Bereich A einen Arbeitsbehälter 12 aufweist, in dem auf an sich bekannte Art und Weise Werkstücke mittels Bearbeitungsmedien in Form von Schleifkörpern geschliffen und oder poliert werden. Der Arbeitsbehälter 12 ist an seiner Oberseite offen und weist an seinem Boden Abflusssiebe auf, die ein automatisch gesteuertes Ablassen von Flüssigkeit aus dem Arbeitsbehälter ermöglichen. In einem hinteren, geschlossenen Bereich B des Gehäuses 10 ist eine Schleifkörperabzugseinrichtung 14 vorgesehen, mit der die Schleifkörper aus dem Arbeitsbehälter 12 in einen Zwischenspeicher 52 überführt werden können. Auch wenn dies in den Figuren nicht dargestellt ist, kann das Gehäuse 10 zur Schalldämmung an seiner Oberseite geschlossen sein. Auch kann die Vorderseite des offenen Bereichs A mit einer Türe zur verbesserten Schalldämmung verschlossen werden.

In dem vorderen, nach vorne offenen Bereich A des Gehäuses 10 ist an diesem über ein Gelenk 16 ein Schaltschrank 18 schwenkbar befestigt, der sich über die gesamte Höhe des Gehäuses 10 erstreckt. Für Wartungsarbeiten am Arbeitsbehälter 12 oder an der Maschine lässt sich der Schaltschrank 18 in Fig. 1 im Uhrzeigersinn nach außen schwenken, um einen Zugriff in die Maschine zu erleichtern.

Gegenüberliegend zu dem Schaltschrank ist im Bereich A des Gehäuses 10 eine Hebeeinrichtung 20 über einen Schwenkarm 22 verschwenkbar befestigt, so dass die Hebeeinrichtung 20 über den Mittelpunkt des Arbeitsbehälters 12 verschwenkt werden kann. Hierdurch ist es möglich, Werkstücke oder eine Werkstückaufnahme 25 in der Mitte des Arbeitsbehälters 12 abzulassen bzw. aus der Mitte des Arbeitsbehälters 12 aufzunehmen. Das Zu- und Abführen einer solchen Werkstückaufnahme 25 kann mit Hilfe eines Transportwagens erfolgen, der in den Bereich A eingefahren wird. Die Werkstückaufnahme 25 kann an einer Position X an die Hebeeinrichtung 20 angekoppelt und angehoben werden. Anschließend wird die Hebeeinrichtung 20 im Uhrzeigersinn bis über den Arbeitsbehälter 12 verschwenkt und abgelassen, woraufhin sich die Werkstückaufnahme 25 in der Mitte des Arbeitsbehälters 12 und an dessen Boden befindet (vgl. Fig. 2, 3 und 4). Dort kann die Werkstückaufnahme 25 an einer mit dem Arbeitsbehälter 12 fest verbundenen Werkstückhalterung 24 fixiert werden, sodass das Werkstück oder die Werkstücke vibrationsfest an dem Arbeitsbehälter 12 fixiert sind und zusammen mit diesem schwingen. Eine Fixierung kann beispielsweise dadurch erfolgen, dass die Werkstückhalterung 24 als Magnetspannplatte ausgebildet ist. Alternativ kommen verschiedene andere Ausführungsformen einer Werkstückhalterung in Frage, beispielsweise Klemmhebel, Spannhebel, Verschraubungen oder form- oder kraftschlüssige Halterungen.

Zum Verschließen des Behälters 12 ist ein Deckel 26 vorgesehen, an dessen Unterseite zumindest eine Kamera zur Prozessüberwachung befestigt sein kann. Der Deckel 26 ist über einen Tragarm 28 an einer Hubeinrichtung 30 befestigt. Mit Hilfe dieser Hubeinrichtung 30 lässt sich der Deckel 26 über den Behälter 12 bewegen, sodass der Deckel den Behälter nicht berührt, jedoch den Behälterrand außen umgreift. Auch lässt sich der Deckel 26 mithilfe der Hubeinrichtung 30 nach oben anheben, wobei der Deckel in der angehobenen Stellung durch eine Verriegelungseinrichtung automatisch in seiner angehobenen Stellung blockiert wird.

Der Arbeitsbehälter 12 mit der darin befindlichen Werkstückaufnahme 25 und darauf über Zentrierbolzen montierten Werkstücken W ist auf mehreren Gummipuffern oder Dämpfern 32 schwingend gelagert und weist an seinem Außenumfang bei dem dargestellten Ausführungsbeispiel zwei gegenüberliegend montierte Unwuchtmotoren 34 und 36 auf, die den Arbeitsbehälter 12 in Schwingung versetzen und dadurch auf bekannte Art und Weise die Schleifkörper im Behälter umlaufend bewegen. Um die Bewegung der Schleifkörper innerhalb des Arbeitsbehälters 12 beeinflussen zu können, sind beide Unwuchtmotoren 34 und 36 um eine senkrecht zur Behälterwand verlaufende Achse S verstellbar montiert, so dass diese in einem Bereich von 0 bis 180° verschwenkt werden können. Um eine einfache Verstellung zu ermöglichen, ist jeder Unwuchtmotor auf einer Drehscheibe montiert, die nur mit Hilfe eines Spannrings fixiert ist. Auf diese Weise müssen zum Verschwenken der Unwuchtmotoren lediglich die Schrauben des Spannrings leicht gelöst werden, d.h. es muss keine vollständige Demontage der Unwuchtmotoren erfolgen. Die Drehzahl der Unwuchtmotoren lässt sich durch eine Prozesssteuerung geeignet regeln, beispielsweise in einem Bereich zwischen 600 und 3000 U/min, um die Schwingungsamplitude des Arbeitsbehälters sowie die Bewegungsrichtung und die Geschwindigkeit der Schleifkörper in dem Arbeitsbehälter geeignet anzupassen.

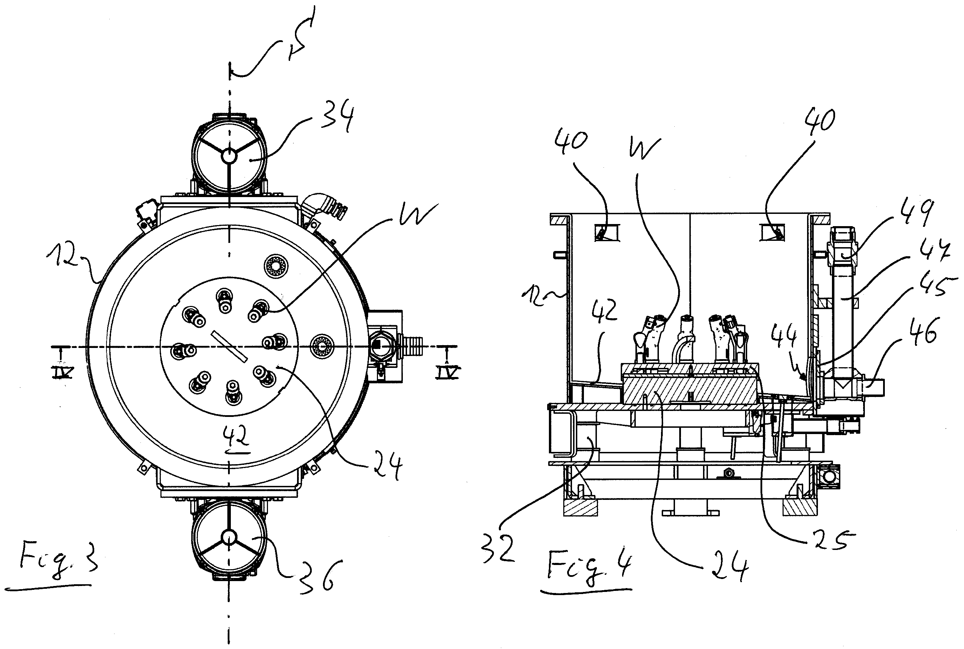

Wie insbesondere Fig. 4 verdeutlicht, sind im oberen Bereich des Arbeitsbehälters 12 Sprühdüsen 40 in den Behälter integriert, um Prozessflüssigkeiten und/oder Reinigungsflüssigkeit oder Druckluft in den Behälter einbringen zu können. Optional kann im Bereich des Arbeitsbehälters auch eine Handbrause vorgesehen sein, um diesen zu reinigen. Weiterhin verdeutlicht Fig. 4, dass der Boden des Behälters 12 optional als Schrägboden 42 ausgeführt ist, der sich in Richtung einer an der Außenwand des Arbeitsbehälters 12 vorgesehenen Austrittsöffnung 44 neigt. Wenn somit durch die Schleifkörperabzugseinrichtung 14 Schleifkörper aus dem Arbeitsbehälter 12 abgezogen werden, ist ein Nachströmen von weiteren Schleifkörpern bei Vibration des Arbeitsbehälters 12 durch den Schrägboden 42 erleichtert.

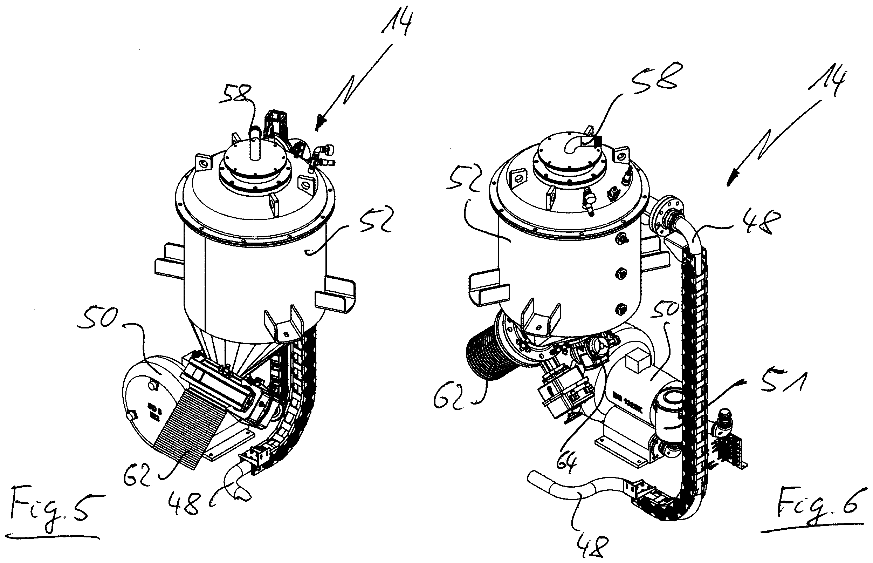

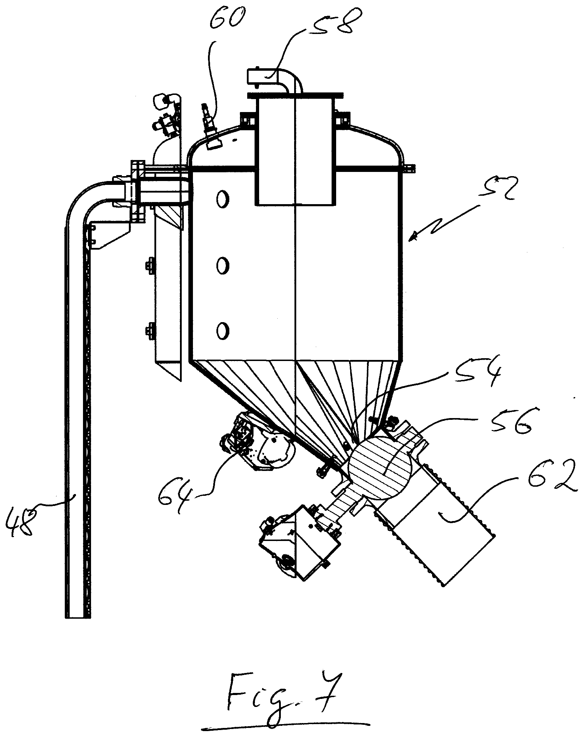

Von der über einen fernsteuerbaren Verschluss 45 verschließbaren Austrittsöffnung 44 können die Schleifkörper über einen Anschlussflansch 46 in eine flexible Rohrleitung 48 eintreten, die mit der Schleifkörperabzugseinrichtung 14 in Verbindung steht. Die Schleifkörperabzugseinrichtung 14 ist in den Fig. 5 bis Fig. 7 näher dargestellt und weist eine Unterdruckquelle 50 auf, die bei dem dargestellten Ausführungsbeispiel als Seitenkanalverdichter ausgebildet ist. Das Bezugszeichen 51 bezeichnet einen Luftfilter, der dafür sorgt, dass angesaugte Festkörper ausgefiltert werden. Weiterhin ist die Schleifkörperabzugseinrichtung 14 mit einem Zwischenspeicher 52 versehen, der bei dem dargestellten Ausführungsbeispiel als Fliehkraftabscheider bzw. Zyklonabscheider ausgebildet ist und der in Fig. 7 im Querschnitt dargestellt ist. Der Fliehkraftabscheider 52 weist einen grundsätzlich zylindrischen Grundkörper auf, an dessen Unterseite sich ein trichterförmiger Endabschnitt anschließt, der eine Auslassöffnung 54 aufweist. Die Auslassöffnung 54 ist von einem ferngesteuerten Verschluss 56 verschließbar. Weiterhin befindet sich an der Oberseite des Zwischenspeichers 52 ein mit der Unterdruckquelle 50 verbundener Sauganschluss 58 sowie mehrere Füllstandssensoren 60 sowie ein Druckschalter. Die Rohrleitung 48 ist an der Oberseite des Zwischenspeichers 52 tangential in diesen eingeführt, so dass bei Anlegen eines Unterdrucks durch Inbetriebnahme der Unterdruckquelle 50 im Bereich des Sauganschlusses 58 ein Unterdruck erzeugt wird, der Luft und zusammen mit der angesaugten Luft Schleifkörper aus der Rohrleitung 48 ansaugt. Diese treten dann tangential in das Innere des Zwischenspeichers 52 ein und umlaufen diesen entlang seiner Innenwand, wobei die Schleifkörper abgebremst und im Inneren des Zwischenspeichers 52 angehäuft werden. Das Volumen des Zwischenspeichers 52 ist dabei so gewählt, dass das maximale Volumen der im Arbeitsbehälter 12 befindlichen Schleifkörper aufgenommen werden kann.

Für eine Einstellung des Unterdrucks in der Rohrleitung 48 ist vor dem Anschlussflansch 46 ein vertikales Steigrohr 47 (Fig. 4) vorgesehen, an dessen oberem Ende ein manuell oder automatisch steuerbarer Verschluss 49 angeordnet ist, mit dem die in die Rohrleitung 48 angesaugte Luftmenge variiert werden kann.

Weiterhin weist die beschriebene Gleitschleifvorrichtung eine mit der Prozesssteuerung verbundene Dosiereinrichtung 70 (Fig. 1) auf, mit der Wasser und/oder Compound automatisch zudosiert werden können. Auch kann eine Dosiereinrichtung zur Zugabe von Pasten vorgesehen sein.

Mithilfe von Schwingungssensoren, die an dem Arbeitsbehälter 12 angeordnet sind, lässt sich durch die Prozesssteuerung der gesamte Prozessablauf überwachen und kontrollieren und zur Qualitätssicherung protokollieren. Hierbei kann es auch vorteilhaft sein, wenn in den Unwuchtmotoren Temperaturfühler angeordnet sind, um diese zu überwachen.

Wie Fig. 2 verdeutlicht, ist der Zwischenspeicher 52 oberhalb des Arbeitsbehälters 12 angeordnet und ein Auslassstutzen 62 des Zwischenspeichers 52 ist in Richtung des Arbeitsbehälters 12 geneigt, so dass die Schleifkörper nach Öffnen des ferngesteuerten Verschlusses 56 durch die Auslassöffnung 54 und den Auslassstutzen 62 in das Innere des Arbeitsbehälters 12 strömen können. Hierbei ist der Auslassstutzen 62 so orientiert, dass dieser nicht auf die in der Mitte des Arbeitsbehälters angeordneten Werkstücke sondern in den ringförmigen Zwischenraum zwischen den Werkstücken und der Behälteraußenwand gerichtet ist, damit beim Einfüllen von Schleifkörpern empfindliche Werkstücke nicht beschädigt werden. Um diesen Vorgang zu unterstützen, ist ferner an dem Zwischenspeicher 52 im Bereich des trichterförmigen unteren Endes eine Vibrationseinrichtung 64 vorgesehen, mit deren Hilfe der federnd gelagerte Zwischenspeicher 52 in Schwingung versetzt werden kann.

Um eine Abtrennung von Schleifkörpern zu ermöglichen, die aufgrund von Abrieb eine vorbestimmte Größe unterschritten haben, kann in dem Rückführungskreislauf zwischen der Austrittsöffnung 44 des Arbeitsbehälters 12 und dem Wiedereintritt der Schleifkörper in den Arbeitsbehälter eine Größenklassifizierung vorgenommen werden. Hierzu können die Schleifkörper beispielsweise über ein Lochsieb mit einer vorbestimmten Größe geführt werden, sodass Schleifkörper mit einer zu geringen Größe ausgesondert werden. Es versteht sich, dass eine solche Größenklassifizierung im Zusammenhang mit einer Schleifkörperabzugseinrichtung auch bei anderen Gleitschleifvorrichtungen eingesetzt werden kann, bei denen die Werkstücke nicht an dem Arbeitsbehälter befestigt sind sondern zusammen mit den Schleifkörper in diesem bewegt werden. Bei einer solchen Vorrichtung können die Werkstücke zusammen mit den Schleifkörpern zunächst aus dem Arbeitsbehälter abgeführt und dann durch eine Klassifizierungseinrichtung geführt werden, in der beispielsweise die Werkstücke von den Schleifkörpern getrennt werden und/oder in der Schleifkörper mit einer zu geringen Größe aussortiert werden.

## Patentansprüche

1. Gleitschleifvorrichtung zum Gleitschleifen von Werkstücken mittels Bearbeitungsmedien in Form von Schleifkörpern, mit einem Arbeitsbehälter (12) zur Aufnahme der Schleifkörper, der eine mit diesem verbundene Werkstückhalterung (24) aufweist, mit der zumindest ein Werkstück (W) an dem Arbeitsbehälter (12) befestigt werden kann, und mit einer Schleifkörperabzugseinrichtung (14), welche die Schleifkörper aus dem Arbeitsbehälter (12) in einen Zwischenspeicher (52) überführt.

2. Vorrichtung nach Anspruch 1,
**dadurch gekennzeichnet,**
**dass** die Schleifkörperabzugseinrichtung (14) eine Unterdruckquelle (50), insbesondere in Form eines Seitenkanalverdichters, aufweist.

3. Vorrichtung nach Anspruch 1 oder 2,
**dadurch gekennzeichnet,**
**dass** der Zwischenspeicher (52) ein Fliehkraftabscheider ist.

4. Vorrichtung nach einem der vorstehenden Ansprüche,
**dadurch gekennzeichnet,**
**dass** eine Auslassöffnung (54) des Zwischenspeichers (52) oberhalb des Arbeitsbehälters (12) angeordnet ist.

5. Vorrichtung nach einem der vorstehenden Ansprüche,
**dadurch gekennzeichnet,**
**dass** der Zwischenspeicher (52) mit einer Vibrationseinrichtung (64) versehen ist.

6. Vorrichtung nach einem der vorstehenden Ansprüche,
**dadurch gekennzeichnet,**
**dass** der Zwischenspeicher (52) eine von einem ferngesteuerten Verschluss (56) verschließbare Auslassöffnung (54) aufweist.

7. Vorrichtung nach einem der vorstehenden Ansprüche,
**dadurch gekennzeichnet,**
**dass** der Zwischenspeicher (52) einen Füllstandssensor (60) aufweist.

8. Vorrichtung nach einem der vorstehenden Ansprüche,
**dadurch gekennzeichnet,**
**dass** der Zwischenspeicher (52) als Flachbettspeicher ausgebildet ist, der eine Unterdruckkammer und optional eine Vibrationseinrichtung aufweist.

9. Vorrichtung nach einem der vorstehenden Ansprüche,
**dadurch gekennzeichnet,**
**dass** der Zwischenspeicher (52) eine haftungsmindernde Wandung aufweist, insbesondere ein Lochblech oder ein mit Oberflächenstrukturen versehenes Wandungsteil.

10. Vorrichtung nach einem der vorstehenden Ansprüche,
**dadurch gekennzeichnet,**
**dass** eine Prozesssteuerung vorgesehen ist, die zumindest eine Kamera sowie eine Bildauswertungseinheit aufweist.

11. Vorrichtung nach einem der vorstehenden Ansprüche,
**dadurch gekennzeichnet,**
**dass** eine Prozesssteuerung vorgesehen ist, die ein Befüllprogramm und/oder ein Entleerungsprogramm enthält, mit dem eine Vibration des Arbeitsbehälters, die Schleifkörperabzugseinrichtung und Ventile zur Steuerung der Zufuhr von Luft oder Flüssigkeit gesteuert werden.

12. Vorrichtung nach einem der vorstehenden Ansprüche,
**dadurch gekennzeichnet,**
**dass** eine Einrichtung zur Abtrennung von Schleifkörpern vorgesehen ist, die eine vorbestimmte Größe unterschreiten.

13. Verfahren zum Betreiben einer Gleitschleifvorrichtung nach einem der vorstehenden Ansprüche, wobei zunächst der Arbeitsbehälter vibriert wird, um die darin befindlichen Schleifkörper in Bewegung zu versetzen und die Werkstücke zu schleifen, und anschließend die Schleifkörperabzugseinrichtung in Betrieb gesetzt wird, um die Schleifkörper aus dem Arbeitsbehälter in den Zwischenspeicher zu überführen, während der Arbeitsbehälter vibriert wird.

14. Verfahren nach Anspruch 13, wobei die Vibration des Arbeitsbehälters in Abhängigkeit von dem Druck in dem Zwischenspeicher gesteuert wird.

15. Verfahren nach Anspruch 13 oder 14, wobei die Vibration des Arbeitsbehälters in Abhängigkeit von dem Füllstand in dem Zwischenspeicher und/oder in dem Arbeitsbehälter gesteuert wird.
